# EUROPEAN PATENT SPECIFICATION

(11) **EP 3 569 351 B1**
(45) Date of publication and mention of the grant of the patent: **09.07.2025**
(21) Application number: 18172004.6
(22) Date of filing: 14.05.2018
(51) Int. Cl.: B23P 15/32, B22F 7/06, B33Y 80/00, B22F 5/00

(54) **VEINED TOOL BLANK**
GEAEDERTER WERKZEUGROHLING
ÉBAUCHE D'OUTIL NERVURÉE

(43) Date of publication of application: 20.11.2019
(73) Proprietor: AB Sandvik Coromant, 811 81 Sandviken (SE)
(72) Inventor: ROYER, Raphael, 45100 Orléans (FR)
(74) Representative: Sandvik

(56) References cited:
- EP-A1- 3 272 445
- EP-A2- 2 519 378
- US-A- 4 222 690
- US-A- 4 713 286
- US-A- 4 991 467
- US-A1- 2016 256 937

## Description

### TECHNICAL FIELD

The invention relates to a tool blank for a drill comprising veins of a superhard material such as poly-crystalline diamond (PCD) or cubic boron nitride (CBN). The invention also relates to a method for manufacturing a drill.

### BACKGROUND ART

Solid cemented carbide drills comprising a different material at the tip of the drill, such that the cutting edges are formed in a material better suited for machining specific kinds of work piece materials, are known. For example, cemented carbide drills having cutting edges of a superhard material, such as poly-crystalline diamond (PCD) or cubic boron nitride (CBN), are known. One method for manufacturing such a drill involves grinding a vein slot in the tip of a tool blank, filling the vein slot with powder of the superhard material (e.g. PCD), and fusing the superhard material to the tool blank under high pressure and high temperature, such that veins of the superhard materials are formed in the tool blank. Thereafter a cutting tool is formed in a conventional way by grinding flutes, etc. When manufacturing veined drills, it is common practice to manufacture only the top part of the drill blank, sometimes referred to as a "nib", using the process described above, and then connect the nib to a conventional tool blank, for example by brazing, before grinding the flutes. EP2519378 discloses a veined drill and a process for manufacturing such drill. When forming the flutes and the cutting edges in the veined tool blank, both cemented carbide and the superhard material within the vein will be removed to some extent. PCD, and other superhard materials, are expensive and difficult to machine, rendering the manufacturing process difficult, time-consuming and expensive. Furthermore, after only a few regrinds, the veined tools will be unusable when the superhard material has been worn away.

### SUMMARY

It is an object of the present invention to mitigate the shortcomings of the prior art and to provide a veined drill with optimal geometry allowing an increased number of regrinds, and wherein the waste of superhard material is reduced.

Thus, according to a first aspect, the invention relates to a tool blank for a drill, the tool blank being substantially cylindrical and having a front end, a rear end and a central longitudinal axis extending therebetween. The tool blank comprises at least one vein of a superhard material formed at the front end, wherein the vein has a depth in the axial direction and comprises a bottom surface, a first side surface and a second side surface. The vein has an extension in an inward direction from the periphery of the tool blank. The first side surface of the vein forms an inclination angle with respect to the longitudinal axis that varies with the radial distance to the longitudinal axis of the tool blank over at least a major part of the extension of the vein, such that the inclination angle substantially corresponds to a desired axial rake angle of a drill to be manufactured from the tool blank.

Hence, each vein in the tool blank is preferably located such that a cutting edge of the drill to be manufactured can be formed of the superhard material.

The invention is based on an insight that it would be beneficial to have geometries of veined drills that are close to geometries of conventional solid twist drills. The inventor has realized that, in order to manufacture veined drills with high helix angle and a conventional twist drill geometry with a conventionally placed and shaped vein, a wide vein is required and a significant amount of superhard material must be removed to create the non-constant axial rake angle of the cutting edge which is commonly used for conventional solid cemented carbide twist drills. The uneven geometric extension of the veins resulting from such extensive, but locally varying, removal of superhard material, may also reduce the number of subsequent regrinds that would be possible.

With a design according to the invention, a very small amount of superhard material must be removed to create the desired rake angle of the drill. Thus, the vein of superhard material can be made with a nearly constant width and large depth, allowing an increased number of regrinds before the superhard material is used up at any location of the cutting edge. Hence, the body of superhard material formed from the veins in the tool blank may have a uniform thickness all along its depth at all radial locations along the cutting edge.

The present invention therefore provides a tool blank for a veined drill with improved geometry and lifespan, with reduced waste of superhard material during production thereof. As used herein, a superhard material is to be understood as a material having a Vickers hardness of at least 25 GPa; a hardness greater than the hardness of conventional cemented carbides used for cutting tools. Thus, the material of the veins will have a greater hardness than the surrounding material of the tool blank. Synthetic and natural diamond, polycrystalline diamond (PCD), cubic boron nitride (cBN) and polycrystalline cBN (PCBN) material are examples of superhard materials.

The expression "substantially cylindrical" as used herein is to be interpreted as essentially cylindrical at least in part. Thus, the expression includes tool blanks of which the forward end is tapered, e.g. for manufacturability reasons or for defining a pointed drill tip.

The expression "tool blank" may refer to a complete tool blank including the part that will form the shank of the drill. Alternatively, the expression may refer to only a part of such complete tool blank, and in particular the most forwardly located part in which the cutting edges of the drill are to be formed, i.e. the part in which the veins are formed. Such part is also referred to as a nib. In cases where the tool blank is such nib, manufacturing of the drill would comprise a step of connecting the nib to a base body such that a complete tool blank is obtained, out of which the drill can be formed. The nib may have a relatively small axial length, but still be long enough for accommodating the veins, i.e. longer than the maximum depth of the veins. The remaining part of the tool blank, i.e. the tool blank base body, may have an axial length greater than the axial length of the nib. As used herein, the expression "tool pre-blank" or "nib pre-blank" refers to a blank in a state in which veins of superhard material have not yet been formed, but in which slots for accommodating the veins have been formed, in contrast to the expressions "tool blank" or "nib" which refers to a blank comprising the veins of the superhard material.

An "inward direction" from the periphery of a tool blank or a tool pre-blank, as used herein when referring to the extension of a vein or a vein slot, respectively, should be understood as a substantially, or at least partly, radial direction approaching the longitudinal axis, but is not limited to a direction completely coinciding with the radial direction, i.e. straight towards the longitudinal axis. On the contrary, an inward direction covers any direction of which the radial component is greater than the tangential component, i.e. such that the vein or vein slot is approaching the longitudinal axis to some degree all along its extension. As an example, an advantageous design of a vein may involve an initial extension in a direction slightly different from the radial direction, and a subsequent extension in a direction straight towards the longitudinal axis. Hence, although the general direction of the vein will be substantially towards the longitudinal axis, or at least towards a point in the vicinity of the longitudinal axis, the vein does not have to extend in a straight line towards the longitudinal axis, but may have a curvilinear extension and/or change direction at various locations along its extension.

The second side surface of the vein may have the same inclination angle with respect to the longitudinal axis as the first side surface, and the width of the vein, i.e. the shortest distance between the first and second side surfaces, may be constant over at least a major part of the depth and extension of the vein. Such uniform design of each vein reduces the amount of superhard material that is required for producing the tool blank and drill without compromising the number of possible regrinds.

The inclination angle may decrease continuously along the extension of the vein from the periphery of the tool blank. Thereby, the vein geometry may correspond to a commonly used rake angle geometry for twist drills.

The bottom surface of each vein may be flat and arranged perpendicularly to the central longitudinal axis of the tool blank. Alternatively, the bottom surface of each vein may be inclined with respect to the longitudinal axis of the tool blank such that the depth of the vein decreases along the extension of the vein from the periphery of the tool blank, wherein the inclination of the bottom surface corresponds to the profile of the cutting edge of a drill to be manufactured from the tool blank. In such embodiments, the bottom surface may have the same profile as the drill tip, wherein such profile may be characterized by a certain point angle and possibly also a corner modification, such as a corner chamfer or corner radius. Such geometry of the bottom surface would further increase the number of possible regrinds before the superhard material is used up at any location of the cutting edge. The front end of the tool blank may also be formed at least partly with a similar profile, for example with a tapering angle corresponding to the point angle of the drill to be manufactured from the tool blank.

The tool blank may comprise a single vein. As an example, such tool blank could be used for manufacturing a single-fluted drill. Alternatively, the tool blank may comprise at least two veins of a superhard material formed at the front end. From such tool blank a two-fluted drill, e.g. having a conventional twist-drill design, could be manufactured. The two veins may be circumferentially spaced by 180°, and extend inwards substantially towards each other from opposite sides of the periphery of the tool blank. The tool blank may comprise additional veins, and the invention is not limited to any specific number of veins or number of flutes/cutting edges of the corresponding drill. For example, a tool blank with three veins may be used for making a three-fluted drill.

The veins formed in the front end of the tool blank may meet and connect at the longitudinal axis of the tool blank. Using such design, all parts of the cutting edges of a drill manufactured from the tool blank would be formed from the superhard material. For a tool blank having two veins formed opposite each other, i.e. circumferentially spaced by 180°, the veins would create a single formation extending from one side of the periphery of the tool blank to the opposite side of the tool blank, passing through the longitudinal axis.

According to alternative embodiments, the veins may not extend all the way to the longitudinal axis of the tool blank, such that there is a region at the front end of the tool blank, around the longitudinal axis, that does not comprise any vein. According to such design, for a drill manufactured from a veined cemented carbide tool blank, some parts of the cutting edges located close to the longitudinal axis, e.g. the chisel, would be formed from cemented carbide and not the superhard material. Cemented carbide is tougher than the superhard material and such configuration may be advantageous in certain applications.

At least a part of the tool blank may be made by additive manufacturing, in particular the part in which veins are formed. Thereby production of the drill is simplified. For example, in cases where the tool blank is a nib, the entire nib pre-blank, i.e. the nib excluding the veins of superhard material, is preferably made by additive manufacturing. In cases where the tool blank is a full-length, complete tool blank comprised of a nib and a base body, preferably only the nib pre-blank is made by additive manufacturing. Additive manufacturing is particularly suitable for making complex features such as cavities, slots, channels, etc., of which the geometry changes continuously and/or smoothly. Therefore, additive manufacturing is preferably used for the part that contains the slots in which the veins of superhard material is formed, since this allows the location and the design of the veins to be precisely controlled. The veins themselves are not formed by additive manufacturing.

According to another aspect of the invention, a method for manufacturing a drill is provided. The method comprises the steps of:
- forming a substantially cylindrical nib pre-blank of cemented carbide with at least one vein slot at a front end thereof, wherein forming the vein slot comprises the steps of forming a bottom surface at a depth and forming a first and a second side surface in an extension inwards from the periphery of the nib pre-blank, wherein the step of forming the first side surface comprises forming the surface at an inclination angle to a longitudinal axis of the nib pre-blank that varies with the radial distance to the longitudinal axis over at least a major part of the extension of the vein slot, such that the inclination angle substantially corresponds to a desired axial rake angle of the drill,
- filling the vein slot at least partially with powder or a slurry comprising particles of a superhard material,
- applying high pressure and high temperature to the nib pre-blank to fuse the superhard material in the vein slot with the nib pre-blank, forming a sintered nib having at least one vein of the superhard material,
- forming a complete tool blank by connecting the sintered nib to a substantially cylindrical tool blank base body,
- forming at least one cutting edge and at least one flute in the tool blank by removing material of the tool blank, wherein the cutting edge is formed at least partly from the superhard material.

Such approach for manufacturing a veined drill is preferred since only the relatively small nib has to be exposed to the high pressure and high temperature required to fuse the superhard material, which facilitates production. Thus, even if it might be possible to form a complete tool blank with vein slots as a single integral body, this would complicate the step of fusing the superhard material to the tool blank.

As apparent, the bottom surface and the first and second side surfaces of the vein slots correspond to the respective surfaces of the veins of superhard material formed therein. Therefore, in the disclosure herein, reference to these respective surfaces can be used interchangeably when discussing orientation (e.g. inclination) of the surfaces. Thus, the inclination angle formed by the first surface of the vein slot with respect to the longitudinal axis should be understood as corresponding to the inclination angle formed by the first surface of the corresponding vein with respect to the longitudinal axis.

The vein slots are preferably located such that the superhard material subsequently fused therein will be located such as to form at least part of the cutting edges of the drill subsequently formed.

The tool blank base body may be formed from cemented carbide, such as tungsten carbide or other materials of similar hardness. Both the nib pre-blank and the base body may, but do not have to, be made of the same material.

A mass of particles, i.e. powder, comprising particles of the superhard material, e.g. poly-crystalline diamond (PCD) or polycrystalline cubic boron nitride (PCBD) may be used to fill the vein slots. Optionally, binder materials such as alcohols, or any other binder material that may be used in the art may be added to the particles to form a slurry. The powder/slurry is packed into the vein slots so as to at least partially fill the vein slots of the nib pre-blank. The vein slots may be completely filled or even overfilled with powder/slurry.

When the superhard material within the vein slots has been fused to the nib pre-blank, the veins of superhard material created thereby acts as an integral part of the sintered nib.

The sintered nib may be connected to the tool blank base body using brazing, sinter fusing, or any other known method suitable for joining different parts of a tool body.

Forming flutes and cutting edges in the tool blank may involve grinding. Other alternatives are laser machining or electro erosion. Using the method according to the invention, only a relatively small amount of superhard material must be removed in order to create the cutting edges and the corresponding rake surfaces and clearance surfaces. Other features may also be formed in the drill, such as, for example, channels for distributing coolant to the cutting edges. However, such features may also be formed already in the tool blank base body and/or formed during the step of forming the nib pre-blank.

The nib pre-blank may be made using additive manufacturing. Even though possible to use additive manufacturing for also making the tool blank base body or a complete tool pre-blank (i.e. the tool blank excluding the veins of superhard material) as a single integral body, it is preferred to manufacture only the relatively small nib pre-blank, having a complex geometry, by additive manufacturing, while manufacturing the tool blank base body, having a less complex geometry, by conventional methods.

### BRIEF DESCRIPTION OF DRAWINGS

Fig. 1 shows a tool blank according to the invention.
Fig. 2A-2B show a drill manufactured from the tool blank in fig. 1.
Figs. 3A-3F show a tool pre-blank, wherein fig. 3A is an isometric view, fig. 3B is a side view, fig. 3C is a top view, and figs. 3D-3F are cross-sectional views.
Fig. 4 is an isometric view of another embodiment of a tool pre-blank.
Fig. 5 is an isometric view of yet another embodiment of a tool pre-blank.
Figs. 6A and 6B are an isometric view and a side view, respectively, of yet another embodiment of a tool pre-blank.
Fig. 7 is a flowchart illustrating a method for manufacturing a drill.

### DETAILED DESCRIPTION OF EMBODIMENTS

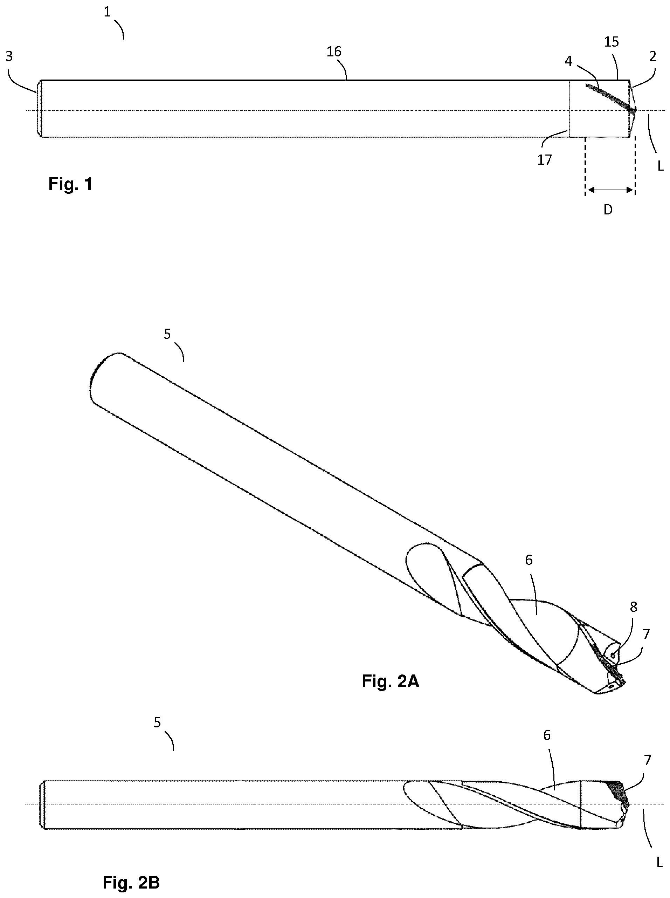

Fig. 1 is a side view of a tool blank 1 according to the invention. The tool blank has a front end 2, a rear end 3 and a central longitudinal axis L extending therebetween. The tool blank is comprised of a nib 15, in which two veins 4 (of which one is visible in fig. 1) are formed, and a tool blank base body 16. The nib 15 and the base body 16 is connected at an interface 17. Even though indicated with solid lines in the drawings herein, the interface 17 is not necessarily visible to the eye. The veins 4 have a depth D in the axial direction and each vein 4 extends over the front end 2 of the tool blank 1 in an inward direction from the periphery of the tool blank.

Fig. 2A and 2B show a drill 5 manufactured from the tool blank in fig. 1. The drill comprises cutting edges 7 formed from the veins of superhard material. The drill according to this example embodiment comprises other features as well, for example flutes 7 and coolant channels 8 for conveying coolant through the drill to the cutting edges. Each cutting edge 7 is formed at an intersection between a rake surface (face) and a relief surface (flank). The axial rake angle is the angle between the face and a line parallel to the central longitudinal axis. At the periphery of the drill, the rake angle is equivalent to the helix angle but decreases when approaching the central longitudinal axis of the drill. As seen in figs. 2A-2B, the superhard material in the veins 4 of the tool blank 1 is partly exposed in the drill 5 after manufacturing thereof, such that the cutting edges, and at least parts of the rake- and clearance surfaces, are formed of superhard material.

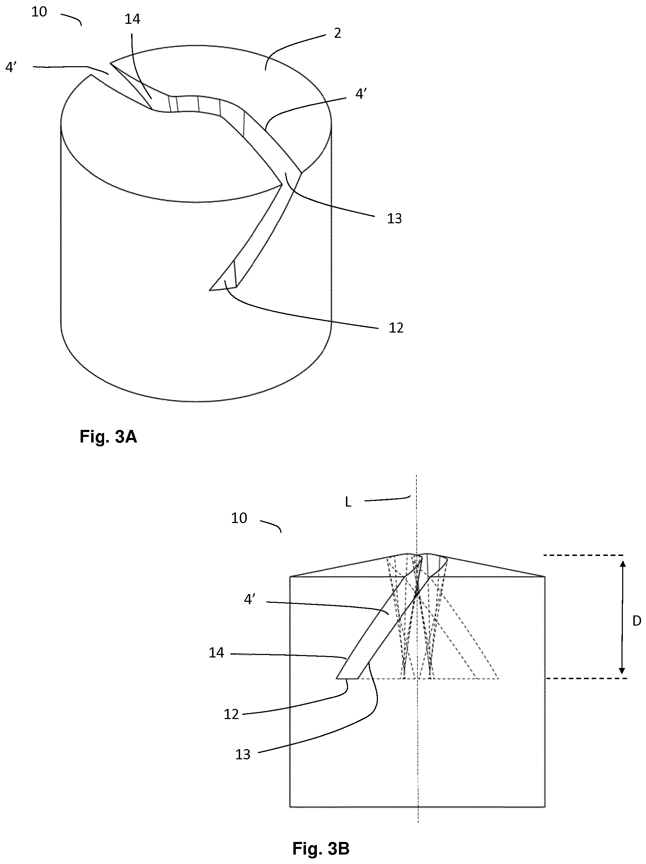

Figs. 3A-3F show a tool pre-blank 10, i.e. a tool blank in a state in which veins of superhard material have not yet been formed. In this example embodiment, the tool pre-blank 10 is a nib pre-blank (e.g. with a geometry corresponding to a nib 15 as shown in figure 1), having a central longitudinal axis L, and made of cemented carbide. The tool pre-blank 10 comprises two vein slots 4' formed at a front side 2 of the tool pre-blank 10. The two vein slots 4' are symmetrically arranged, circumferentially spaced by 180°, and extend inwards, substantially radially, towards each other from opposite sides of the periphery of the tool pre-blank, and meet and connect at the longitudinal axis L. Each vein slot 4' has a depth D in the axial direction and has a bottom surface 12, a first side surface 13, and a second side surface 14. The first side surface 13 forms an inclination angle α with respect to the longitudinal axis L that varies with the radial distance to the longitudinal axis L. The varying inclination angle substantially corresponds to the desired axial rake angle of a drill to be manufactured from the tool pre-blank.

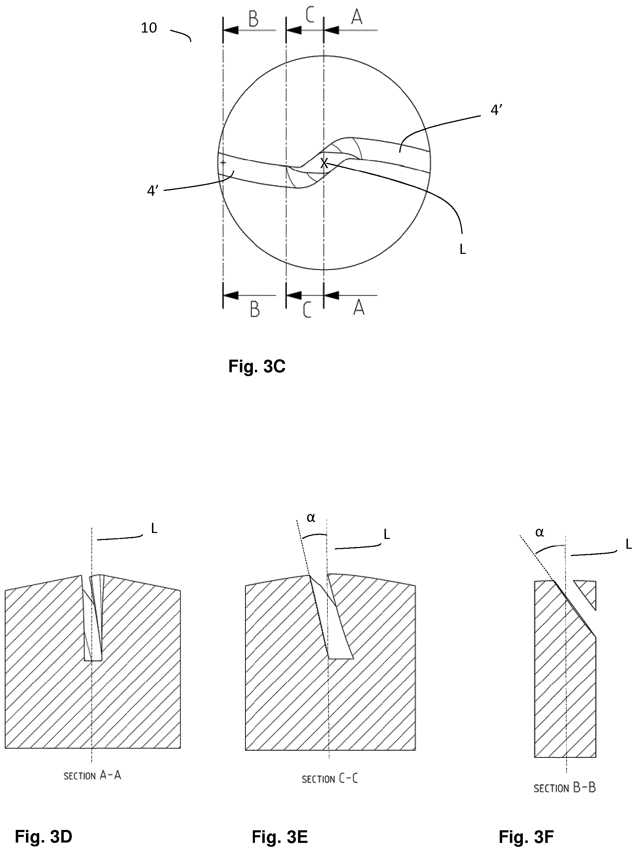

In this embodiment, the second side surface 14 has an inclination angle that varies in the same way as the first side surface, such that the width of each vein slot 4' is constant. As best seen in figs. 3D-3F, being cross-sectional views at different sections (B, C, A, respectively, as indicated in fig. 3C), the inclination angle α is greatest close to the periphery (fig. 3F - section B-B). At the periphery, the inclination angle α correspond to the helix angle of a drill to be manufactured from the tool pre-blank 10. When approaching the axial longitudinal axis L, the inclination angle α of the first side surface decreases (fig. 3E - section C-C). At the longitudinal axis, the inclination angle α of the first side surface is close to zero (fig. 3D - section A-A, wherein the first surface extends in the axial direction nearly parallel to the longitudinal axis L).

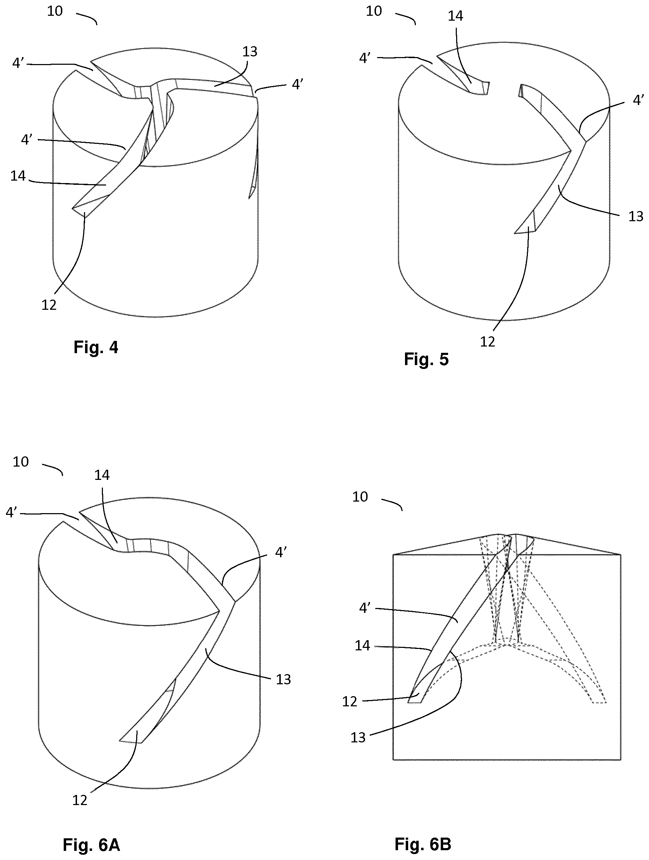

Fig. 4 shows another embodiment of a tool pre-blank comprising three vein slots 4' that meet and connect at the longitudinal axis of the tool pre-blank. The veins are symmetrically arranged, circumferentially spaced around the tool pre-blank by 120°.

Fig. 5 shows another embodiment of a cemented carbide tool pre-blank, wherein the two vein slots 4' do not extend all the way to the longitudinal axis of the tool pre-blank. Hence, after forming the veins, there will be a region at the front end of the tool blank, around the longitudinal axis, that does not comprise any vein. A drill manufactured from such tool blank will have cutting edges of which some parts located close to the longitudinal axis, e.g. the chisel, is formed from cemented carbide and not the superhard material of the veins. Cemented carbide is tougher than the superhard material and a configuration wherein the chisel is made of cemented carbide may be advantageous in certain applications.

Figs. 6A-6B shows another embodiment of a cemented carbide tool pre-blank comprising two vein slots 4'. Contrary to the embodiment shown in figs. 3A-3F, the bottom surface 12 is arranged non-perpendicularly to the longitudinal axis. The bottom surface is inclined with respect to the longitudinal axis such that the depth of the vein slot decreases when approaching the longitudinal axis of the tool pre-blank. The inclination of the bottom surface corresponds to the profile of the cutting edge of a drill to be manufactured from the tool pre-blank. Thus, in the embodiment shown in figs. 6A-6B, the parts of the bottom surface close to the longitudinal axis has an inclination that corresponds to the desired drill point angle, whereas a peripheral part of the bottom surfaces is curved, i.e. with a varying inclination, corresponding to a desired corner modification of the drill, in this case a corner radius.

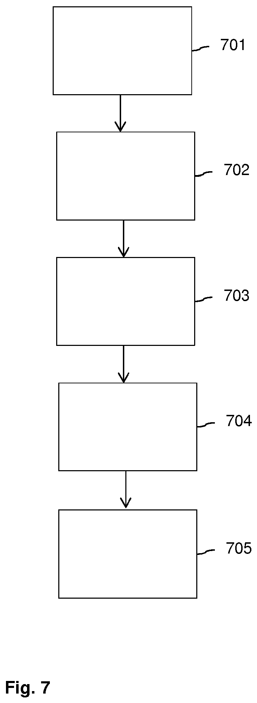

Fig. 7 is a flowchart illustrating a method for producing a cutting tool body according to the invention.

In step 701, a substantially cylindrical nib pre-blank of cemented carbide is formed with at least one vein slot at a front end thereof. Forming each vein slot comprises the steps of forming a bottom surface at a depth, and forming a first and a second side surface in an extension inwards from the periphery of the nib pre-blank. The step of forming the first side surface comprises forming the surface at an inclination angle to a longitudinal axis of the nib pre-blank that varies with the radial distance to the longitudinal axis over at least a major part of the extension of the vein slot, such that the inclination angle substantially corresponds to a desired axial rake angle of the drill. Preferably, the nib pre-blank is made by additive manufacturing. Various kinds of additive manufacturing methods could be used, such as, for example, selective laser sintering or electron beam melting. Such techniques are well known in the art and are not further described herein.

In step 702, the vein slots are at least partly filled with powder or a slurry comprising particles of a superhard material. Thus, a mass of particles, i.e. powder, comprising particles of the superhard material, e.g. poly-crystalline diamond (PCD) or polycrystalline cubic boron nitride (PCBD) may be used to fill the vein slots. Optionally, binder materials such as alcohols, or any other binder material that may be used in the art may be added to the particles to form a slurry. The powder/slurry is packed into the vein slots so as to at least partially fill the vein slots of the blank. The vein slots may be completely filled or even overfilled with powder/slurry.

In step 703, a high pressure and high temperature is applied to the nib pre-blank such as to fuse the superhard material in the vein slots with the nib pre-blank, forming a sintered nib having veins of the superhard material. The nib pre-blank may be subjected to pressures of about 45 Kbar to about 90 Kbar and temperatures of about 1200° to about 1600° C for approximately about 1 to about 50 minutes. When the particles of superhard material have been bonded directly to each other and to the carbide by the sintering process, the nib is removed from the press. Apparatuses and techniques for such sintering are disclosed in U.S. Pat. Nos. 2941248, 3141746, 3745623 and 3743489.

In step 704, the sintered nib is connected to a tool blank base body, such as a conventional tool blank, e.g. a cemented carbide rod. This can be achieved by brazing or sinter fusing or by any other technique known in the art suitable for connecting two pieces of cemented carbide.

In step 705, flutes and cutting edges are formed by removing material of the tool blank, wherein the cutting edges are formed at least partly from the veins of superhard material. This step usually involves grinding. Other techniques for forming flutes and/or cutting edges, or other geometrical features of the drill, includes laser machining and electro erosion.

## Claims

1. A tool blank (1) for a drill, the tool blank being substantially cylindrical and having a front end (2), a rear end (3) and a central longitudinal axis (L) extending therebetween, and comprising at least one vein (4) of a superhard material formed at the front end (2), wherein the vein (4) has a depth (D) in the axial direction and comprises a bottom surface, a first side surface and a second side surface, and wherein the vein (4) has an extension in an inward direction from the periphery of the tool blank, **characterized in that** the first side surface of the vein (4) forms an inclination angle (α) with respect to the longitudinal axis (L) that varies with the radial distance to the longitudinal axis (L) over at least a major part of the extension of the vein (4), such that the inclination angle (α) substantially corresponds to a desired axial rake angle of a drill (5) to be manufactured from the tool blank.

2. A tool blank according to claim 1, wherein the vein (4) is located such that a cutting edge (7) of the drill (5) to be manufactured can be formed of the superhard material.

3. A tool blank according to any of the previous claims, wherein the second side surface has the same inclination angle (α) with respect to the longitudinal axis (L) as the first side surface.

4. A tool blank according to any of the previous claims wherein the width of the vein (4) is constant over at least a major part of the depth (D) and extension of the vein.

5. A tool blank according to any of the previous claims, wherein the inclination angle (α) decreases continuously along the extension of the vein (4) from the periphery of the tool blank.

6. A tool blank according to any of the previous claims, wherein at least a part of the bottom surface of the vein (4) is inclined with respect to the longitudinal axis (L) of the tool blank such that the depth (D) of the vein (4) decreases along the extension of the vein from the periphery of the tool blank, wherein the inclination of the bottom surface corresponds to the profile of a cutting edge (7) of a drill (5) to be manufactured from the tool blank.

7. A tool blank according to any of the previous claims, comprising at least two veins (4) of a superhard material formed at the front end (2).

8. A tool blank according to claim 7, wherein the veins (4) meet and connect at the longitudinal axis (L) of the tool blank.

9. A tool blank according to claim 7, wherein the veins (4) do not extend all the way to the longitudinal axis (L) of the tool blank, such that there is a region at the front end (2) of the tool blank, around the longitudinal axis (L), that does not comprise any vein (4).

10. A tool blank according to any of the previous claims, wherein at least a part of the tool blank is made by additive manufacturing.

11. A tool blank according to any of the previous claims, wherein the superhard material comprises poly-crystalline diamond or cubic boron nitride.

12. A method for manufacturing a drill (5), comprising the steps of
- forming (701) a substantially cylindrical nib pre-blank (10) of cemented carbide with at least one vein slot (4') at a front end thereof, wherein forming the vein slot (4') comprises the steps of forming a bottom surface (12) at a depth (D) and forming a first and a second side surface (13, 14) in an extension inwards from the periphery of the nib pre-blank (10), wherein the step of forming the first side surface (13) comprises forming the surface at an inclination angle (α) to a longitudinal axis (L) of the nib pre-blank that varies with the radial distance to the longitudinal axis (L) over at least a major part of the extension of the vein slot (4'), such that the inclination angle (α) substantially corresponds to a desired axial rake angle of the drill (5),
- filling (702) the vein slot (4') at least partially with powder or slurry comprising particles of a superhard material,
- applying (703) high pressure and high temperature to the nib pre-blank (10) to fuse the superhard material in the vein slot (4') with the nib pre-blank (10), forming a sintered nib (15) having at least one vein (4) of the superhard material,
- forming (704) a complete tool blank (1) by connecting the sintered nib (15) to a substantially cylindrical tool blank base body (16),
- forming (705) at least one cutting edge (7) and at least one flute (6) in the tool blank (1) by removing material of the tool blank, wherein the cutting edge (7) is formed at least partly from the superhard material.

13. A method according to claim 12, wherein the sintered nib (15) is connected to the tool blank base body (16) by brazing or sinter fusing.

14. A method according to any of the claims 12-13 wherein the nib pre-blank (10) is formed by additive manufacturing.

## Patentansprüche

1. Werkzeugrohling (1) für einen Bohrer, wobei der Werkzeugrohling im Wesentlichen zylindrisch ist und ein vorderes Ende (2), ein hinteres Ende (3) und eine sich dazwischen erstreckende zentrale Längsachse (L) aufweist, und wobei der Werkzeugrohling wenigstens eine Ader (4) aus einem superharten Material aufweist, die am vorderen Ende (2) ausgebildet ist, wobei die Ader (4) in axialer Richtung eine Tiefe (D) aufweist und eine untere Fläche, eine erste Seitenfläche und eine zweite Seitenfläche aufweist, und wobei die Ader (4) eine Erstreckung in einer Richtung nach innen von der Peripherie des Werkzeugrohlings aufweist, **dadurch gekennzeichnet, dass** die erste Seitenfläche der Ader (4) einen Neigungswinkel (α) in Bezug auf die Längsachse (L) ausbildet, der mit dem radialen Abstand zur Längsachse (L) über wenigstens einen Großteil der Erstreckung der Ader (4) variiert, so dass der Neigungswinkel (α) im Wesentlichen einem gewünschten axialen Spanwinkel eines aus dem Werkzeugrohling herzustellenden Bohrers (5) entspricht.

2. Werkzeugrohling nach Anspruch 1, wobei die Ader (4) so angeordnet ist, dass aus dem superharten Material eine Schneidkante (7) des herzustellenden Bohrers (5) ausgebildet werden kann.

3. Werkzeugrohling nach einem der vorstehenden Ansprüche, wobei die zweite Seitenfläche denselben Neigungswinkel (α) zur Längsachse (L) aufweist wie die erste Seitenfläche.

4. Werkzeugrohling nach einem der vorstehenden Ansprüche, wobei die Breite der Ader (4) über wenigstens einen wesentlichen Teil der Tiefe (D) und der Erstreckung der Ader konstant ist.

5. Werkzeugrohling nach einem der vorherigen Ansprüche, wobei der Neigungswinkel (α) entlang der Erstreckung der Ader (4) von der Peripherie des Werkzeugrohlings kontinuierlich abnimmt.

6. Werkzeugrohling nach einem der vorherigen Ansprüche, wobei wenigstens ein Teil der unteren Fläche der Ader (4) in Bezug auf die Längsachse (L) des Werkzeugrohlings derart geneigt ist, dass die Tiefe (D) der Ader (4) entlang der Erstreckung der Ader von der Peripherie des Werkzeugrohlings abnimmt, wobei die Neigung der unteren Fläche dem Profil einer Schneidkante (7) eines aus dem Werkzeugrohling herzustellenden Bohrers (5) entspricht.

7. Werkzeugrohling nach einem der vorhergehenden Ansprüche, der wenigstens zwei Adern (4) aus einem superharten Material aufweist, die am vorderen Ende (2) ausgebildet sind.

8. Werkzeugrohling nach Anspruch 7, wobei die Adern (4) an der Längsachse (L) des Werkzeugrohlings aufeinandertreffen und miteinander verbunden sind.

9. Werkzeugrohling nach Anspruch 7, wobei sich die Adern (4) nicht über die gesamte Strecke bis zur Längsachse (L) des Werkzeugrohlings erstrecken, so dass am vorderen Ende (2) des Werkzeugrohlings um die Längsachse (L) herum ein Bereich vorhanden ist, der keine Ader (4) aufweist.

10. Werkzeugrohling nach einem der vorstehenden Ansprüche, wobei wenigstens ein Teil des Werkzeugrohlings durch additive Fertigung hergestellt ist.

11. Werkzeugrohling nach einem der vorhergehenden Ansprüche, wobei das superharte Material polykristallinen Diamant oder kubisches Bornitrid enthält.

12. Verfahren zur Herstellung eines Bohrers (5), mit den Schritten
- Ausbilden (701) eines im Wesentlichen zylindrischen Spitzen-Vorrohlings (10) aus Hartmetall mit wenigstens einem Ader-Schlitz (4') an einem vorderen Ende desselben, wobei das Ausbilden des Ader-Schlitzes (4') die Schritte umfasst: Ausbilden einer unteren Fläche (12) in einer Tiefe (D) und Ausbilden einer ersten und einer zweiten Seitenfläche (13, 14) in einer Erstreckung nach innen von der Peripherie des Spitzen-Vorrohlings (10), wobei der Schritt des Ausbildens der ersten Seitenfläche (13) das Ausbilden der Fläche in einem Neigungswinkel (α) zu einer Längsachse (L) des Spitzen-Vorrohlings aufweist, der mit dem radialen Abstand zur Längsachse (L) über wenigstens einen Großteil der Erstreckung des Steges (4') variiert, so dass der Neigungswinkel (α) im Wesentlichen einem gewünschten axialen Spanwinkel des Bohrers (5) entspricht,
- Füllen (702) des Aderschlitzes (4') wenigstens teilweise mit Pulver oder Aufschlämmung mit Partikeln eines superharten Materials,
- Anwenden (703) von hohem Druck und hoher Temperatur auf den Spitzen-Vorrohling (10), um das superharte Material im Aderschlitz (4') mit dem Spitzen-Vorrohling (10) zu verschmelzen,
- Ausbilden einer gesinterten Spitze (15), die wenigstens eine Ader (4) aus dem superharten Material aufweist,
- Ausbilden (704) eines vollständigen Werkzeugrohlings (1) durch Verbinden der gesinterten Spitze (15) mit einem im Wesentlichen zylindrischen Werkzeugrohling-Grundkörper (16),
- Ausbilden (705) wenigstens einer Schneidkante (7) und wenigstens einer Auskehlung (6) im Werkzeugrohling (1) durch Entfernen von Material des Werkzeugrohlings, wobei die Schneidkante (7) wenigstens teilweise aus dem superharten Material gebildet ist.

13. Verfahren nach Anspruch 12, wobei die gesinterte Spitze (15) durch Löten oder Sintern mit dem Werkzeugrohling-Grundkörper (16) verbunden wird.

14. Verfahren nach einem der Ansprüche 12-13, wobei der Spitzen-Vorrohling (10) durch additive Fertigung ausgebildet wird.

## Revendications

1. Ebauche d'outil (1) pour un foret, l'ébauche d'outil étant sensiblement cylindrique et présentant une extrémité avant (2), une extrémité arrière (3) et un axe longitudinal central (L) s'étendant entre celles-ci, et comprenant au moins une veine (4) d'un matériau superdur formée au niveau de l'extrémité avant (2), où la veine (4) présente une profondeur (D) dans la direction axiale et comprend une surface de fond, une première surface latérale et une seconde surface latérale, et où la veine (4) présente une étendue dans une direction vers l'intérieur depuis la périphérie de l'ébauche d'outil, **caractérisée en ce que** la première surface latérale de la veine (4) forme un angle d'inclinaison (α) par rapport à l'axe longitudinal (L) qui varie avec la distance radiale à compter de l'axe longitudinal (L) sur au moins une majeure partie de l'étendue de la veine (4), de telle sorte que l'angle d'inclinaison (α) correspond sensiblement à un angle d'attaque axial souhaité d'un foret (5) devant être fabriqué à partir de l'ébauche d'outil.

2. Ebauche d'outil selon la revendication 1, dans laquelle la veine (4) est située de telle sorte qu'une arête de coupe (7) du foret (5) devant être fabriqué peut être formée du matériau superdur.

3. Ebauche d'outil selon l'une quelconque des revendications précédentes, dans laquelle la seconde surface latérale présente le même angle d'inclinaison (α) par rapport à l'axe longitudinal que la première surface latérale.

4. Ebauche d'outil selon l'une quelconque des revendications précédentes, dans laquelle la largeur de la veine (4) est constante sur au moins une majeure partie de la profondeur (D) et de l'étendue de la veine.

5. Ebauche d'outil selon l'une quelconque des revendications précédentes, dans laquelle l'angle d'inclinaison (α) diminue continuellement le long de l'étendue de la veine (4) depuis la périphérie de l'ébauche d'outil.

6. Ebauche d'outil selon l'une quelconque des revendications précédentes, dans laquelle au moins une partie de la surface de fond de la veine (4) est inclinée par rapport à l'axe longitudinal (L) de l'ébauche d'outil de telle sorte que la profondeur (D) de la veine (4) diminue le long de l'étendue de la veine depuis la périphérie de l'ébauche d'outil, où l'inclinaison de la surface de fond correspond au profil d'une arête de coupe (7) d'un foret (5) devant être fabriqué à partir de l'ébauche d'outil.

7. Ebauche d'outil selon l'une quelconque des revendications précédentes, comprenant au moins deux veines (4) d'un matériau superdur formées au niveau de l'extrémité avant (2).

8. Ebauche d'outil selon la revendication 7, dans laquelle les veines (4) se rencontrent et se relient au niveau de l'axe longitudinal (L) de l'ébauche d'outil.

9. Ebauche d'outil selon la revendication 7, dans laquelle les veines (4) ne s'étendent pas sur toute la longueur de l'axe longitudinal (L) de l'ébauche d'outil, de telle sorte qu'il existe une zone au niveau de l'extrémité avant (2) de l'ébauche d'outil, autour de l'axe longitudinal (L), qui ne comprend pas de veine (4).

10. Ebauche d'outil selon l'une quelconque des revendications précédentes, dans laquelle au moins une partie de l'ébauche d'outil est constituée par fabrication additive.

11. Ebauche d'outil selon l'une quelconque des revendications précédentes, dans laquelle le matériau superdur comprend du diamant polycristallin ou du nitrure de bore cubique.

12. Procédé de fabrication d'un foret (5), comprenant les étapes consistant à
- former (701) une pré-ébauche de pointe sensiblement cylindrique (10) de carbure cémenté avec au moins une fente pour veine (4') au niveau d'une extrémité avant de celle-ci, où le fait de former la fente pour veine (4') comprend les étapes consistant à former une surface de fond (12) à une profondeur (D) et former une première et une seconde surfaces latérales (13, 14) dans une étendue vers l'intérieur depuis la périphérie de la pré-ébauche de pointe (10), où l'étape consistant à former la première surface latérale (13) comprend le fait de former la surface à un angle d'inclinaison (α) par rapport à un axe longitudinal (L) de la pré-ébauche de pointe qui varie avec la distance radiale à compter de l'axe longitudinal (L) sur au moins une majeure partie de l'étendue de la fente pour veine (4'), de telle sorte que l'angle d'inclinaison (α) correspond sensiblement à un angle d'attaque axial souhaité du foret (5),
- remplir (702) la fente pour veine (4') au moins partiellement de poudre ou de bouille comprenant des particules d'un matériau superdur,
- appliquer (703) une pression élevée et une température élevée à la pré-ébauche de pointe (10) pour fusionner le matériau superdur dans la fente pour veine (4') avec la pré-ébauche de pointe (10), en formant une pointe frittée (15) présentant au moins une veine (4) du matériau superdur,
- former (704) une ébauche d'outil complète (1) en liant la pointe frittée (15) à un corps de base d'ébauche d'outil sensiblement cylindrique (16),
- former (705) au moins une arête de coupe (7) et au moins une goujure (6) dans l'ébauche d'outil (1) en retirant de la matière de l'ébauche d'outil, où l'arête de coupe (7) est formée au moins partiellement du matériau superdur.

13. Procédé selon la revendication 12, dans lequel la pointe frittée (15) est reliée au corps de base d'ébauche d'outil (16) par brasage ou par fusion par frittage.

14. Procédé selon l'une quelconque des revendications 12 et 13, dans lequel la pré-ébauche de pointe (10) est constituée par fabrication additive.
